# EUROPÄISCHE PATENTSCHRIFT

(11) **EP 0 592 763 B1**
(45) Veröffentlichungstag und Bekanntmachung des Hinweises auf die Patenterteilung: **15.01.1997**
(21) Anmeldenummer: 93105893.7
(22) Anmeldetag: 09.04.1993
(51) Int. Cl.: F16L 19/02

(54) **Kupplungsstück zum fluiddichten Ankoppeln einer Fluidleitung an ein Gegenstück**
Coupling piece for a sealed coupling of a pipe to a counter piece
Pièce de raccord pour le raccordement étanche d'un tuyau avec une pièce opposée

(30) Priorität: 14.10.1992 CH 3209/92
(43) Veröffentlichungstag der Anmeldung: 20.04.1994
(73) Patentinhaber: Bürgi, Markus, 8102 Oberengstringen (CH)
(72) Erfinder: Bürgi, Markus, 8102 Oberengstringen (CH)
(74) Vertreter: Blum, Rudolf Emil Ernst

(56) Entgegenhaltungen:
- DE-A- 2 303 950
- FR-A- 1 128 933
- US-A- 4 572 551

## Beschreibung

Die Erfindung betrifft ein Kupplungsstück zum fluiddichten Ankoppeln einer Fluidleitung, insbesondere einer Schlauchleitung, an ein Gegenstück mit im wesentlichen ebener Dichtfläche, mit einem zur Verbindung mit der Fluidleitung bestimmten Kupplungskörper, einem am Kupplungskörper angreifenden Ueberwurfelement, welches zur Fixierung von Kupplungskörper und Gegenstück aneinander bestimmt ist und einer zwischen Kupplungskörper und Gegenstück angeordneten Dichtung.

Derartige Kupplungsstücke sind in einer Vielzahl von Ausführungen bekannt. Dabei ist eine in der Regel ringförmige Dichtungsscheibe zwischen der Dichtfläche des Gegenstücks und einer Dichtfläche des Kupplungskörpers vorgesehen. Das Gegenstück kann dabei Teil einer Armatur sein oder einer sonstigen Installation für beliebige Flüssigkeiten oder Gase. Als Ueberwurfelement wird meist eine Ueberwurfmutter verwendet. Es kann aber auch ein als Bajonettverschluss ausgestaltetes Ueberwurfelement vorgesehen sein. Bei den bekannten Kupplungsstücken ist es nachteilig, dass beim Schliessen des Kupplungsstücks mittels einer Ueberwurfmutter, deren Innengewinde am Aussengewinde des Gegenstücks eingreift, durch die Reibungskraft zwischen Ueberwurfmutter und Kupplungskörper dieser ebenfalls eine Drehbewegung erfährt. Dadurch wird ein Drehmoment auf die Fluidleitung ausgeübt, was unerwünscht ist. Dieser Nachteil ist beispielsweise bei der in der deutschen Offenlegungsschrift 2.303.950 beschriebenen Kupplung besonders ausgeprägt, wo eine zwischen Ueberwurfmutter und Kupplungskörper gefangene Dichtung beim Aufschrauben der Ueberwurfmutter auf das Gegenstück zwangläufig ein Drehmoment auf den Kupplungskörper überträgt. Andere bekannte Kupplungen, wie etwa die im französischen Patent 1.128.933 oder im US Patent 4.572.551 beschriebenen, gestatten es, beim Aufschrauben der Ueberwurfmutter diese anfänglich weit genug rückwärts über den Kupplungskörper zu ziehen, um letzteren in kraftschlüssigem Eingriff mit der Dichtung, und über diese mit dem Gegenstück, zu bringen. Dadurch kann ein gegenseitiges Verdrehen von Kupplungskörper und Gegenstück weitgehend verhindert werden. Es ist aber meist unbequem, und bei nicht fest montiertem Gegenstück in der Regel unmöglich, dieses festzuhalten, die Ueberwurfmutter darauf aufzuschrauben, und gleichzeitig das Kupplungsstück mit hinreichender Kraft in Richtung des Gegenstückes zu drücken. Besonders nachteilig ist dies bei einer Schlauchleitung, da dabei der Schlauch verdreht wird, denn nach dem Festschrauben der Ueberwurfmutter bleibt der Schlauch in der verdrehten Lage fixiert, was seine Lebensdauer herabsetzen kann.

Der Erfindung liegt deshalb die Aufgabe zugrunde, ein Kupplungsstück zu schaffen, bei welchem dieser Nachteil nicht auftritt, und welches trotzdem so einfach zu handhaben und so kostengünstig ist, wie herkömmliche Kupplungsstücke.

Diese Aufgabe wird bei einem Kupplungsstück der eingangs genannten Art in der im Anspruch 1 beschriebenen Weise gelöst.

Die bereits anfänglich durch die Dichtung gebildete kraftschlüssige Verbindung des Kupplungskörpers mit dem feststehenden Gegenstück verhindert ein Mitdrehen des Kupplungskörpers beim Anziehen der Ueberwurfmutter oder des Bajonettverschlusses.

Vorzugsweise ist dabei die Dichtfläche am Kupplungskörper konisch ausgebildet, wobei sich mit zunehmenden Festziehen des Ueberwurfelementes auch eine zunehmende Reibungskraft zwischen Kupplungskörper und Dichtung ergibt, welche ein synchrones Verdrehen des Kupplungskörpers mit dem Ueberwurfelement verhindert.

Vorzugsweise ist ferner die Gleitverbindung zwischen Kupplungskörper und Ueberwurfelement derart ausgestaltet, dass sich der Kupplungskörper zentriert. Dadurch wird die kraftschlüssige Verbindung zwischen Dichtung und Kupplungskörper sichergestellt.

Im folgenden werden Ausführungsbeispiele der Erfindung anhand der Figuren näher erläutert. Dabei zeigt:
Figur 1 eine teilweise geschnittene Darstellung des Kupplungsstück und des Gegenstücks zu Beginn des Kupplungsvorganges;
Figur 2 das Kupplungsstück und das Gegenstück von Figur 1 in der verschraubten Endstellung;
Figur 3 den Kupplungskörper alleine in einer teilweise geschnittenen Darstellung;
Figur 4 die Ueberwurfmutter alleine in ebenfalls teilweise geschnittener Darstellung, und
Figur 5 die Dichtung in teilweise geschnittener Darstellung;
Figur 6 eine teilweise geschnittene Darstellung eines weiteren Kupplungsstücks und eines Gegenstücks zu Beginn des Kupplungsvorganges; und
Figur 7 das Kupplungsstück und das Gegenstück von Figur 6 in der verschraubten Endstellung.

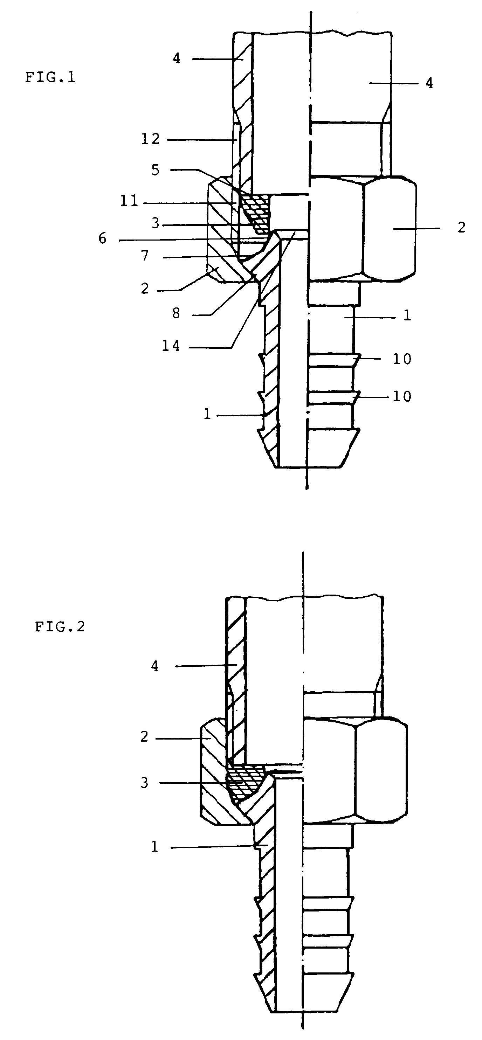

In Figur 1 ist der Kupplungskörper 1 als Schlauchnippel dargestellt, mit einer Anzahl von Schlauchhaltevorsprüngen 10. Die Schlauchleitung ist nicht dargestellt. Sie wird auf bekannte Weise am Schlauchnippel befestigt. Am Kupplungskörper 1 greift eine Ueberwurfmutter 2 an. Die Angriffsflächen 8 von Kupplungskörper und Ueberwurfmutter sind dabei konische Flächen, wodurch sich eine Zentrierung von Ueberwurfmutter und Kupplungskörper zueinander ergibt. Die Ueberwurfmutter 2 weist ein Innengewinde 11 auf. Dieses ist passend zu einem Aussengewinde 12 des Gegenstücks 4 ausgestaltet. Als Gegenstück 4 für das Kupplungsstück kann dabei irgend ein beliebiges Installationselement mit Aussengewinde dienen, an welches die Schlauchleitung anzuschliessen ist. Ueblicherweise ist das Gegenstück 4 Teil einer Armatur. Dabei können das Gegenstück 4 und die Ueberwurfmutter 2 in den üblichen Zollgrössen oder in beliebigen anderen, z.B. metrischen Massen ausgeführt sein.

Figur 1 zeigt diejenige Stellung des Kupplungsstückes am Gegenstück, bei welcher die Ueberwurfmutter in ihrer Anfangsstellung zum Befestigen des Kupplungsstücks am Gegenstück ist, d.h. die Gewinde 11 und 12 sind erst gerade mit einem Teil eines Gewindeganges oder höchstens mit einigen wenigen Gewindegängen in Eingriff. Bei üblichen Kupplungsstücken wird nun beim weiteren Aufschrauben der Ueberwurfmutter 2 auf das Gewinde des Gegenstücks 4 der Kupplungskörper durch die Reibungskräfte an den Flächen 8 drehend von der Ueberwurfmutter 2 mitgenommen. Dieser Mitnahmeeffekt verstärkt sich, je weiter die Ueberwurfmutter 2 auf das Gegenstück aufgeschraubt wird, da durch das Heranziehen des Kupplungskörpers 1 an das Gegenstück 4 eine Zugkraft auf die Schlauchleitung ausgeübt wird, welche ihrerseits die Reibungskraft an den Flächen 8 vergrössert. Bei der Ausgestaltung des Kupplungsstücks gemäss der Erfindung wird dieser unerwünschte Effekt verhindert. Dabei bewirkt nämlich die Dichtung 3 bereits in der in Figur 1 gezeigten Anfangsstellung eine kraftschlüssige Verbindung zwischen dem feststehenden Gegenstück 4 und dem Kupplungskörper. Die Dichtung 3 liegt mit einer ihrer Flächen auf der Dichtfläche 5 des Gegenstücks 4 auf. Mit einer anderen Fläche beaufschlagt die Dichtung 3 gleichzeitig die Dichtfläche 6 des Kupplungskörpers 1. Dies erzeugt einen genügenden Bremseffekt gegen das Mitnehmen des Kupplungskörpers 1 durch die drehende Ueberwurfmutter 2. Insbesondere ist dies der Fall, wenn die Beaufschlagung der Dichtfläche 6 durch die Dichtung 3 gleichmässig entlang des Umfanges der Dichtfläche erfolgt, was durch die Zentrierung von Ueberwurfmutter und Kupplungskörper 1 sichergestellt wird.

Beim weiteren Aufschrauben der Ueberwurfmutter 2 auf das Gegenstück 4 wird der Kupplungskörper 1 nach und nach näher an das Gegenstück 4 herangezogen. Dabei ergibt sich ebenfalls nach und nach eine zunehmende Verformung der Dichtung 3, welche die konische Dichtfläche 6 beaufschlagt und an dieser anliegend zunehmend verformt wird. Die zunehmende Verformung durch die weiter und weiter an das Gegenstück 4 herangeführte Dichtfläche 6 ergibt dabei eine zunehmende Krafteinwirkung der Dichtung 3 auf den Kupplungskörper 1, was erwünscht ist, um den zunehmenden Mitnahmeeffekt der Ueberwurfmutter auf den Kupplungskörper zu kompensieren. Vorzugsweise kann die konische Dichtfläche des Kupplungskörpers 1 eine sich ändernde Konizität aufweisen, z.B. wie dargestellt mit einem ersten Konusabschnitt 6 und einem zweiten Konusabschnitt 7. Dies bewirkt eine weitere Erhöhung der Bremskraft der Dichtung 3 gegen das Mitdrehen des Kupplungskörpers 1 ab dem Erreichen des zweiten Abschnittes 7.

Die erfindungsgemässe Ausgestaltung des Kupplungsstücks bewirkt zudem eine hervorragende Dichtheit auch bei nur geringem Anzugsmoment der Ueberwurfmutter 2. Es hat sich gezeigt, dass lediglich durch Handverschraubung der Ueberwurfmutter 2 eine Dichtheit gegenüber Drücken von 12-25 bar erzielt werden kann. Auch die Dichtheit wird durch den zweiten Konusabschnitt 7 verbessert, da in diesem Abschnitt die Dichtung 3 mit grösserem Druck anliegt.

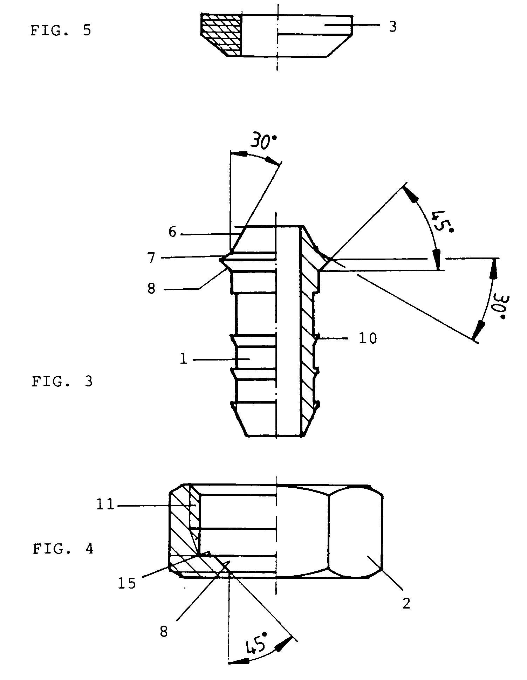

Vorzugsweise ist die Dichtung 3 in ihrer Querschnittsform im wesentlichen keilförmig, wie in Figur 1 dargestellt. Auf diese Weise wird sichergestellt, dass die Dichtung 3 auch bei zunehmender Verformung, d.h. Biegung gegen die Mutter 2 hin, nicht mit dieser flächig in Kontakt kommt, was ein Mitdrehen der Dichtung bewirken könnte. Erst bei der in Figur 2 dargestellten Endstellung, bei welcher die Ueberwurfmutter 2 mit dem Solldrehmoment angezogen ist, oder bei welcher das Gegenstück 4 an einem nicht dargestellten Anschlag in der Ueberwurfmutter ansteht, ergibt sich ein flächiger Kontakt zwischen Ueberwurfmutter 2 und der elastisch verformten Dichtung 3. In diesem Fall wird die zwischen dem Kupplungskörper 1 und der Ueberwurfmutter 2 gebildete Dichtkammer vollständig von der Dichtung 3 ausgefüllt. Vorzugsweise ist ferner der Eingangsbereich 14 des Kupplungskörpers 1 innen angeschrägt, um die Durchflussgeräusche zu vermindern.

Die Figur 3 zeigt den Schlauchnippel für sich alleine in ebenfalls teilweise geschnittener Darstellung. Ersichtlich sind dabei die konischen Flächen 6 und 7, welche jeweils z.B. um 30° gegenüber der Vertikalen bzw. gegenüber der Horizontalen geneigt verlaufen. Weiter ersichtlich ist die Angriffsfläche 8 für die Ueberwurfmutter, welche Fläche im gezeigten Beispiel in einem Winkel von 45° geneigt angeordnet ist. Der Schlauchnippel 1 kann aus einem beliebigen im Sanitärbereich oder im Gasleitungsbereich üblichen Material hergestellt sein, z.B. aus Messing, Stahl oder auch aus Kunststoff. Die Ausführung des Kupplungskörpers 1 als Schlauchnippel ist dabei nur beispielsweise gezeigt. Natürlich kann dieser Kupplungskörper auch zur Befestigung an anderen als Schlauchleitungen ausgeführt sein oder den Endteil einer solchen Leitung bilden. Figur 4 zeigt eine Ueberwurfmutter 2. Diese weist insbesondere die um 45° geneigte Angriffsfläche 8 für den Kupplungskörper auf. Ferner das Innengewinde 11. Die in Figur 4 dargestellte Ueberwurfmutter weist ferner einen Uebergangsabschnitt 15 zwischen dem Gewindeteil und der abgeschrägten Fläche 8 auf. Diese Mutter 2 ist daher grösser als die in Figur 1 und 2 dargestellte Mutter. Es handelt sich dabei z.B. um eine 1/2" Mutter gegenüber den in den Figuren 1 und 2 gezeigten beispielsweise 3/8" grossen Muttern. Der Nippel 1 kann aber in beiden Fällen die gleiche Dimension aufweisen, da die Grössenänderung von 3/8" auf 1/2" lediglich durch die Aenderung der Mutter aufgefangen wird. Auch die Ueberwurfmutter 2 kann aus einem beliebigen üblichen Material hergestellt sein. Sie kann an ihrem Aussenumfang, wie dargestellt, als Mehrkant ausgebildet sein. Auch eine andere Ausbildung ist durchaus möglich. Dies insbesondere, da mit dem erfindungsgemässen Kupplungsstück schon bei geringen Anzugsdrehmomenten der Ueberwurfmutter eine sehr gute Dichtheit erzielbar ist.

Figur 5 zeigt die Dichtung 3 ebenfalls in teilweise geschnittener Darstellung. Die Dichtung 3 weist dabei den bevorzugten, im wesentlichen keilförmigen Querschnitt auf. Auch andere Querschnittsformen sind aber durchaus möglich. Die in Figur 5 dargestellte Dichtung 3 ist dabei an die Ueberwurfmutter 2 mit ihrem Abschnitt 15 angepasst. Als Material der Dichtung kommen herkömmliche Dichtungsmaterialien wie Gummi oder Kunststoff infrage. Die spezielle Form der Dichtung 3 kann dabei durch Giessen oder durch eine mechanische Bearbeitung erzeugt werden.

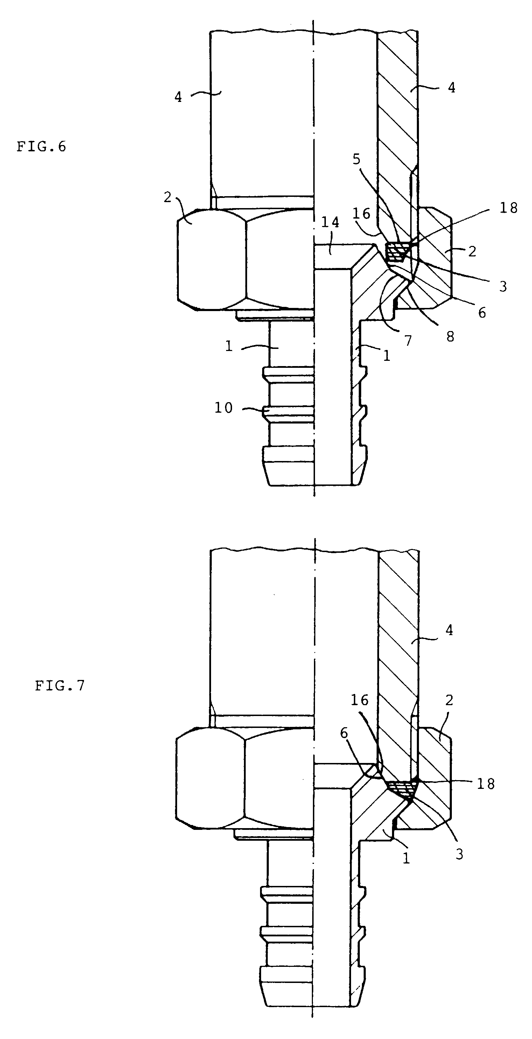

Figuren 6 und 7 zeigen ein weiteres Ausführungsbeispiel des erfindungsgemässen Kupplungsstückes, wobei gleiche Bezugszeichen wie in den Figuren 1 und 2 gleiche Elemente bezeichnen. Bei dem Ausführungsbeispiel nach den Figuren 6 und 7 weist die ebene Dichtfläche 5 des Gegenstücks einen konischen Abschnitt 16 auf. Dieser Abschnitt weist im wesentlichen dieselbe Neigung auf, wie die Dichtfläche 6 des Kupplungskörpers. Im verschraubten Zustand (Figur 7) ergibt sich dadurch ein Anliegen des Abschnittes 16 an der Dichtfläche 6, was eine zusätzliche, metallische Dichtung zwischen Kupplungskörper und Gegenstück bewirkt. Die Dichtung weist in dem gezeigten Ausführungsbeispiel ferner einen Flansch 18 auf, welcher in das Gewinde des Ueberwurfelementes eingreift (Fig. 6).

Dies ist insbesondere bei der Verwendung des Kupplungsstückes bei Hydraulikleitungen mit hohem Druck bevorzugt.

## Patentansprüche

1. Kupplungsstück zum fluiddichten Ankoppeln einer Fluidleitung, insbesondere einer Schlauchleitung, an ein Gegenstück (4) mit im wesentlichen ebener Dichtfläche (5), mit einem zur Verbindung mit der Fluidleitung bestimmten Kupplungskörper (1), einem am Kupplungskörper angreifenden Ueberwurfelement (2), welches zur Fixierung von Kupplungskörper und Gegenstück aneinander bestimmt ist und einer zwischen Kupplungskörper und Gegenstück angeordneten Dichtung (3), dadurch gekennzeichnet, dass beim Ansetzen des Ueberwurfelementes (2) an das Gegenstück die Dichtung (3) zwangsweise sowohl auf der Dichtfläche des Gegenstückes (4) wie auch auf derjenigen des Kupplungskörpers (1) aufliegt, um Gegenstück und Kupplungskörper kraftschlüssig zu koppeln.

2. Kupplungsstück nach Anspruch 1, dadurch gekennzeichnet, dass die Dichtung eine Ringdichtung ist, welche beim Ansetzen des Ueberwurfelementes mit einer ersten Fläche an der Dichtfläche (5) des Gegenstücks und mit einer zweiten Fläche an einer konischen Schulter (6) des Kupplungskörpers anliegt.

3. Kupplungsstück nach Anspruch 2, dadurch gekennzeichnet, dass die Schulter des Kupplungskörpers zwei Abschnitte mit unterschiedlichem Konuswinkel aufweist.

4. Kupplungsstück nach einem der Ansprüche 2 oder 3, dadurch gekennzeichnet, dass die Ringdichtung eine im wesentlichen keilförmigen Vertikalquerschnittsform aufweist.

5. Kupplungsstück nach einem der Ansprüche 1 bis 3, dadurch gekennzeichnet, dass die gegenseitigen Angriffsflächen (8) des Ueberwurfelementes und des Kupplungskörpers konisch ausgebildet sind, um das Ueberwurfelement und den Kupplungskörper zueinander zu zentrieren.

6. Kupplungsstück nach einem der Ansprüche 1 bis 5, dadurch gekennzeichnet, dass zwischen dem Kuppund dem Ueberwurfelement eine Dichtungskammer gebildet ist.

7. Kupplungsstück nach einem der Ansprüche 2 bis 6, dadurch gekennzeichnet, dass die konische Schulter (6) einen Neigungswinkel aufweist, der im wesentlichen dem Neigungswinkel eines konischen Abschnittes (16) der Dichtfläche (5) entspricht, derart, dass sich im verschraubten Zustand ein metallischer Dichtkontakt zwischen Kupplungskörper (1) und Gegenstück ergibt.

## Claims

1. Coupling link for a leakproof connection between a liquid duct, especially a hose, and a terminal (4) having an essentially plane sealing surface (5), with a coupling piece (1), a cap nut (2) which acts on the coupling piece in order to lock the coupling piece and the terminal together, and with a seal (3) placed between the coupling piece and the terminal, characterized in that when the cap nut (2) is being engaged with the terminal the seal (3) is urged both against the sealing surface of the terminal (4) and against the sealing surface of the coupling piece (1), in order to mutually engage them by friction.

2. Coupling link according to claim 1, characterized in that the seal is an annular seal a first surface of which contacts the sealing surface (5) of the terminal and a second surface of which contacts a conical shoulder (6) of the coupling piece when the cap nut is engaged.

3. Coupling link according to claim 2, characterized in that the shoulder of the coupling piece has two sections with different conical angles.

4. Coupling link according to one of claim 2 or 3, characterized in that the vertical section of the annular seal is essentially wedge-shaped.

5. Coupling link according to one of claim 1 to 3, characterized in that the cooperating locking surfaces (8) of the cap nut and of the coupling piece are conical in order to mutually center these pieces.

6. Coupling link according to one of claim 1 to 5, characterized in that a sealing chamber is formed between the coupling piece and the cap nut.

7. Coupling link according to one of claim 1 to 6, characterized in that the conical shoulder (6) has an inclination which essentially corresponds to the inclination of a conical section (16) of the sealing surface (5), so as to create a metal sealing contact between the coupling piece (1) and the terminal in the locked state.

## Revendications

1. Pièce d'accouplement pour l'accouplement étanche d'une conduite de fluide, en particulier d'un tuyau, à une contre-pièce (4) comportant une surface d'étanchéité essentiellement plane (5), avec un corps d'accouplement (1) destiné à être relié à la conduite, un écrou à chapeau (2) coopérant avec le corps d'accouplement et servant à réunir le corps d'accouplement avec la contre-pièce, et avec un joint (3) situé entre la pièce d'accouplement et la contre-pièce, caractérisé en ce que lorsque l'écrou à chapeau (2) vient en prise avec la contre-pièce le joint (3) s'applique forcément tant contre la surface d'étanchéité de la contre-pièce (4) que contre celle du corps d'accouplement (1), pour créer une liaison à friction entre la contre-pièce et le corps d'accouplement.

2. Pièce d'accouplement selon la revendication 1, caractérisé en ce que le joint est un joint annulaire dont une première surface s'applique contre la surface d'étanchéité (5) de la contre-pièce et dont une seconde surface s'applique contre un rebord conique (6) du corps d'accouplement lors de l'engagement de l'écron à chapeau.

3. Pièce d'accouplement selon la revendication 2, caractérisé en ce que le rebord conique du corps d'accouplement comporte deux sections ayant des angles d'ouverture conique différents.

4. Pièce d'accouplement selon une des revendications 2 ou 3, caractérisé en ce que le joint annulaire présente une coupe verticale essentiellement en forme de coin.

5. Pièce d'accouplement selon une des revendications 1 à 3, caractérisé en ce que les surfaces venant en prise (8) de l'écrou à chapeau et de la pièce d'accouplement sont coniques afin de centrer mutuellement l'écrou à chapeau et le corps d'accouplement.

6. Pièce d'accouplement selon une des revendications 1 à 5, caractérisé en ce qu'une chambre d'étanchéité est formée entre le corps d'accouplement et l'écrou à chapeau.

7. Pièce d'accouplement selon une des revendications 2 à 6, caractérisé en ce que le rebord conique (6) présente un angle d'inclinaison correspondant sensiblement à celui d'une partie conique (16) de la surface d'étanchéité (5), de manière à former en position verrouillée un contact métallique étanche entre le corps d'accouplement (1) et la contre-pièce.
